# EUROPÄISCHE PATENTANMELDUNG

(11) **EP 3 618 236 A2**
(43) Veröffentlichungstag der Anmeldung: **04.03.2020**
(21) Anmeldenummer: 19193101.3
(22) Anmeldetag: 22.08.2019
(51) Int. Cl.: H02K 3/28, H02K 1/27, H02K 11/33, H02K 1/28, H02K 3/30, H02K 3/34, H02P 25/22

(54) **PERMANENTERREGTE ELEKTRISCHE MASCHINE**

(30) Priorität: 30.08.2018 DE 102018006915
(71) Anmelder: eMoSys GmbH, 82319 Starnberg (DE)
(72) Erfinder: Gründl, Andreas, 82319 Starnberg (DE); Hoffmann, Bernhard, 82319 Starnberg (DE); Eck, Stephan, 82346 Andechs (DE)
(74) Vertreter: Schmidt, Steffen J.

(57) **Zusammenfassung**

Eine permanenterregte elektrische Maschine hat einen Ständer und einen Läufer. Dabei hat entweder der Ständer eine Spulenanordnung und der Läufer ist mit Permanentmagnet-Elementen versehen, oder der Läufer hat eine Spulenanordnung und der Ständer mit ist Permanentmagnet-Elementen versehen. Bei dieser permanenterregten elektrischen Maschine hat die Spulenanordnung mehrere Einzelpolwicklungen. Der Läufer hat eine geradzahlige Polzahldifferenz zum Ständer. Dadurch ist die elektrische Maschine als eine mehrphasige Maschine ausgestaltet. Jede der Einzelpolwicklungen hat einen ersten Wicklungsanschluss, der über eine jeweilige Halbbrückenanordnung mit einem Energiespeicher (Quelle oder Senke, je nach Generator- oder Motor-Betriebsart) zu verbinden ist. Jede der Einzelpolwicklungen hat einen zweiten Wicklungsanschluss, der mit einem Sternpunkt-Anschluss zu verbinden ist. Eine Steuerschaltung ist dazu eingerichtet ist, in Abhängigkeit von externer Signalisierung die jeweilige Halbbrückenanordnung jeder der Einzelpolwicklungen zeitlich gesteuert zu betätigen. Dabei ist durch die zeitliche Schaltabfolge der Halbbrückenanordnungen, und damit der Bestromung, jeder der Einzelpolwicklungen auch die Phasenzahl der Maschine festzulegen, um in Abhängigkeit auch der Polzahldifferenz eine 2-, 3- oder 6-phasige, oder zwei oder mehrere versetzt taktende mehrphasige elektrische Maschine zu bilden.

## Beschreibung

### Hintergrund

Vorgestellt wird eine permanenterregte elektrische Maschine, die auch für hohe Drehzahlen zwischen 10.000 und 100.000 Umdrehungen pro Minute oder mehr auslegbar ist und für die Serienfertigung gut geeignet ist. Insbesondere geht es um eine permanenterregte elektrische Maschine mit einem Ständer und einem Läufer, von denen einer, zum Beispiel der Ständer, eine Spulenanordnung zur Magnetfelderzeugung und der andere, zum Beispiel der Läufer, Permanentmagnet-Elemente zur Interaktion mit dem durch die Spulenanordnung erzeugten Magnetfeld hat.

Drehfeldmaschinen mit permanenterregtem Läufer haben in den letzten Jahren an Bedeutung gewonnen, da sie einige wesentliche Vorteile bieten. Der unbewickelte Läufer dieser Maschinen lässt sich gut für hohe Drehzahlen ausführen. Die verfügbaren Magnetwerkstoffe ermöglichen eine sehr hohe Maschinenausnutzung. Da die Drehmomentbildung ohne Läuferströme erfolgt, entstehen mit Ausnahme parasitärer Zusatzverluste im Läufer kaum Verluste. Außerdem haben diese Maschinen einen sehr guten Wirkungsgrad.

### Begriffsdefinitionen

Unter dem Begriff "elektrische Maschine" sind hier sowohl motorisch als auch generatorisch betriebene Maschinen verstanden, als auch Maschinen, die zwischen diesen beiden Betriebsarten wechselnd betrieben werden. Dabei ist es für die hier vorgestellte Anordnung unerheblich, ob eine solche Maschine als Innenläufermaschine oder als Außenläufermaschine ausgestaltet ist.

### Stand der Technik

Bei der Befestigung von Permanentmagneten am Läufer einer elektrischen Maschinen besteht die Gefahr, dass das spröde Sintermaterial der Magnete bricht. Dies kann insbesondere durch thermische Spannungen aufgrund der unterschiedlichen Wärmeausdehnungskoeffizienten von Magnet- und Läufermaterial begünstigt werden. Werden die Magnete nur durch eine Klebverbindung auf dem Läufer befestigt, gerät das Magnetmaterial bei einem Bruch in den Luftspalt der Maschine und die Maschine fällt aus.

Die WO 2007/119952 A1 beschreibt Aufnahmeelemente zur Aufnahme von bevorzugt trapezförmig ausgestalteten Permanentmagneten, die formschlüssig in korrespondierende Schwalbenschwanznuten eines Läuferelements einbringbar sind. Hieraus ergibt sich allerdings das Problem, dass die durch die Umdrehung des Läufers entstehende Krafteinwirkung der Magneten auf die Aufnahmeelemente bzw. die Seitenkanten der Schwalbenschanznuten nur unzureichend kompensiert werden kann, was nach einer gewissen Laufzeit des Läufers zum Bruch der Permanentmagnete führen kann.

Die deutsche Patentanmeldung DE 10 2008 023 999 A1 offenbart hierzu ein Vorrichtung zur Halterung von Magneten, insbesondere von Magneten in einem bewegten Bauteil, insbesondere in einem Läufer einer elektrischen Maschine, insbesondere in einem Blechpaket eines Elektromotors, mit einer Haltetasche, in die ein Magnet eingesetzt ist, der mittels eines Klebers befestigt ist, das sich beim Aushärten in einem vorbestimmten Ausmaß ausdehnt und das ein Treibmittel zum Aufschäumen eines Klebstoffs enthält. Nachteilig hierbei ist, dass die Permanentmagneten in den fest im Läuferpaket integrierten, durch Stanztechnik hergestellten Haltetaschen eingefasst sind. Dies resultiert einerseits in einer geringen Flexibilität bei der Montage eines entsprechenden Rotors bzw. Generators. Andererseits können Spannungen, die aufgrund von Zentrifugalkräften und unterschiedlicher Wärmeausdehnungskoeffizienten der Magnete und des Rotorkerns auftreten, durch den Klebstoff nur begrenzt kompensiert werden.

### Zugrundeliegendes Problem

Ausgehend hiervon stellt sich die Aufgabe, eine für die Serienfertigung geeignete Ausgestaltung einer elektrischen Permanentmagnet-Maschine vorzuschlagen.

### Lösung

Um dieses Ziel zu erreichen, wird hier eine permanenterregte elektrische Maschine mit den Merkmalen des Patentanspruchs 1 vorgeschlagen. Diese permanenterregte elektrische Maschine hat einen Ständer und einen Läufer. Dabei hat entweder der Ständer eine Spulenanordnung und der Läufer ist mit Permanentmagnet-Elementen versehen, oder der Läufer hat eine Spulenanordnung und der Ständer mit ist Permanentmagnet-Elementen versehen. Bei dieser permanenterregten elektrischen Maschine hat die Spulenanordnung mehrere Einzelpolwicklungen. Der Läufer hat eine geradzahlige Polzahldifferenz zum Ständer. Dadurch ist die elektrische Maschine als eine mehrphasige Maschine ausgestaltet. Jede der Einzelpolwicklungen hat einen ersten Wicklungsanschluss, der über eine jeweilige Halbbrückenanordnung mit einem Energiespeicher (Quelle oder Senke, je nach Generator- oder Motor-Betriebsart) zu verbinden ist. Jede der Einzelpolwicklungen hat einen zweiten Wicklungsanschluss, der mit einem Sternpunkt-Anschluss zu verbinden ist. Eine Steuerschaltung ist dazu eingerichtet ist, in Abhängigkeit von externer Signalisierung die jeweilige Halbbrückenanordnung jeder der Einzelpolwicklungen zeitlich gesteuert zu betätigen. Dabei ist durch die zeitliche Schaltabfolge der Halbbrückenanordnungen, und damit der Bestromung, jeder der Einzelpolwicklungen auch die Phasenzahl der Maschine festzulegen, um in Abhängigkeit auch der Polzahldifferenz eine 2-, 3- oder 6-phasige, oder zwei oder mehrere versetzt taktende mehrphasige elektrische Maschine zu bilden.

### Vorteile, Ausgestaltungen und Weiterbildungen

Diese Anordnung hat gegenüber bekannten permanenterregten elektrischen Maschinen den Vorteil, dass sie sehr kompakt, mechanisch sehr stabil und hoch effizient ist. Die Anordnung ist durch die in die elektrische Maschine integrierte Elektronik vorteilhaft, da hier die sonst erforderlichen Verbindungskabel zwischen der elektrischen Maschine und der Elektronik (Halbbrückenanordnung, Steuerschaltung, etc.) entfallen. Durch die Einzelspulenansteuerung entfällt der Aufwand für die Verschaltung der Spulen in der elektrischen Maschine sowie eine sonst erforderliche Parallelschaltung von Halbbrückenanordnungen in der Elektronik. Die einzelnen Komponenten, zum Beispiel der Halbbrückenanordnung können für weniger Leistung ausgelegt sein. Auch der erforderliche Zwischenkreiskondensator ist dem jeweiligen für jede einzelne oder eine kleine Gruppe der Halbbrückenanordnungen / Einzelpolwicklungen individuell vorgesehen, so dass er sehr viel kleiner bauend zu realisieren ist. Die unmittelbare Nähe von integrierter Elektronik und elektrischer Maschine der hier vorgestellten Lösung reduziert EMV Probleme. Außerdem kann die durch ein Umstellen der zeitlichen Schaltabfolge der Halbbrückenanordnungen die Betriebsart der elektrischen Maschine verändert, und so an unterschiedliche Betriebsanforderungen angepasst werden.

In einer Variante der permanenterregten elektrischen Maschine ist an einer Stirnseite eine Steuerschaltung mit den jeder der Einzelpolwicklungen zugeordneten Halbbrückenanordnungen und der Leistungsversorgung auf einer oder mehreren Platinen angeordnet. Dabei ist jeder der ersten Wicklungsanschlüsse unmittelbar und zuleitungsfrei mit der ihm zugeordneten Halbbrückenanordnung verdrahtet. Sonst übliche Zuleitungen, Stecker und Buchsen entfallen damit.

In einer Variante der permanenterregten elektrischen Maschine ist/sind die Platine(n) der Steuerschaltung aus einem wärmeleitenden, elektrisch isolierenden Keramikmaterial zum Beispiel Aluminiumoxid, Aluminiumnitrid, Siliziumnitrid, gebildet. Das Keramikmaterial ist an seiner dem Ständer und/oder Läufer zugewandten Seite mit oberflächenvergrößernden Strukturen, zum Beispiel Rippen oder Stegen ausgestaltet. Alternativ oder kumulativ ist das Keramikmaterial mit fluiddurchströmten internen Kühlstrukturen ausgestaltet. Alternativ oder kumulativ ist das Keramikmaterial an seiner dem Ständer und/oder Läufer abgewandten Seite mit elektrischen Leiterbahnen und Kontaktstellen für die Halbbrückenanordnungen und die Leistungsversorgung ausgestaltet ist.

In einer Variante der permanenterregten elektrischen Maschine haben die Einzelpolwicklungen der Spulenanordnung eine konstante Polteilung.

In einer Variante der permanenterregten elektrischen Maschine ist jede der Einzelpolwicklungen mit dem ersten Wicklungsanschluss über die jeweilige Halbbrückenanordnung mit einem Zwischenkreiskondensator der Leistungsversorgung zu verbinden.

In einer Variante der permanenterregten elektrischen Maschine ist der Sternpunkt-Anschluss für jeden zweiten Wicklungsanschluss der Einzelpolwicklungen (teil-)ringförmig ausgestaltet und an einer Stirnseite des Ständers und/oder Läufers angeordnet. Sofern alle zweiten Wicklungsanschlüsse der Einzelpolwicklungen mit einem einzigen Sternpunkt-Anschluss verbunden sind, kann der Sternpunkt-Anschluss ein kompletter Ring sein. Es ist aber auch möglich, nur Gruppen der zweiten Wicklungsanschlüsse der Einzelpolwicklungen zu bilden, wobei jeweils alle der zweiten Wicklungsanschlüsse einer Gruppe mit einem Sternpunkt-Anschluss verbunden sind.

In einer Variante einer elektrischen Maschine mit einem Ständer und einem Läufer, wobei der Ständer und/oder der Läufer eine Spulenanordnung aufweist, die in einem weichmagnetischen Kern zumindest teilweise in wenigstens einer Nut aufgenommen ist, und eine Nutisolierung zwischen einer Nutwand und/oder einem Nutgrund des Kerns und der Spulenanordnung (18) aus Keramik, zum Beispiel Aluminiumnitrid (AIN) - Keramik oder Siliziumnitrid (Si₃N₄) - Keramik angeordnet ist.

AlN-Keramik hat eine sehr hohe Wärmeleitfähigkeit von etwa 180 W/(m·K). Siliziumnitrid (Si₃N₄) - Keramik hat eine hohe Wärmeleitfähigkeit von etwa 30 W/(m·K). Der Einsatz solcher Keramik erlaubt einen Betrieb der elektrischen Maschine mit hoher Leistung und raschen Lastwechseln, da die dabei entstehende Verlust-Wärme damit sehr gut und sehr rasch abgeführt wird, und die Keramik sehr gut elektrisch isoliert. Damit ist der Wärmewiderstand bei einer Dicke der Keramik-Auskleidung von 100 - 800 µm, z.B. 400µm um Größenordnungen geringer als bei einer herkömmlichen Nutisolierung aus Nomex® Papier. Die Ankoppelung der Keramik an die Nutwand des Kerns kann mit einem hoch wärmeleitenden Kleber erfolgen, da die elektrische Isolation durch die Keramik sichergestellt wird. Die elektrische Isolation am Nutgrund kann über entsprechende Kriechstrecken erfolgen, die für den Magnetkreis nicht schädlich sind. Es ist auch möglich, durch der Nutform entsprechend gestaltete U-Profile aus Keramik eine einstückige keramische, in die Nut einzulegende Nutisolierung zu realisieren.

In einer Variante einer permanenterregten elektrische Maschine mit einem Ständer und einem Läufer, wobei der Ständer eine Spulenanordnung aufweist und der Läufer mit Permanentmagnet-Elementen versehen ist, haben die Permanentmagnet-Elemente im Wesentlichen eine quaderförmige Gestalt und sind in entsprechend geformten Magnettaschen des Läufers aufgenommen. Die Magnettaschen des Läufers überragen die Permanentmagnet-Elemente in radialer Richtung zu dem Ständer hin. An ihrem jeweiligen Rand zum Ständer hin sind die durch die Magnetfluss-Pole mit tangential orientierten, keilförmigen Fortsätzen versehen, die zu einer radial orientierten Mittellängsachse der jeweiligen Magnettasche in einem Winkel von etwa 20° bis etwa 70°, vorzugsweise etwa 45° orientiert sind. Zwischen jedem der Permanentmagnet-Elemente und den keilförmigen Fortsätzen der betreffenden Magnettasche ist ein Nutkeil aufgenommen, dessen Gestalt zumindest annähernd zu den keilförmigen Fortsätzen der jeweiligen durch die Magnetfluss-Pole gebildeten Magnettasche korrespondiert.

In einer Variante der permanenterregten elektrische Maschine sind der Nutkeil und die keilförmigen Fortsätze derart korrespondierend schräg gestaltet, dass eine auf die Wand der Magnettasche und/oder die keilförmigen Fortsätze wirkende Spreizkraft wegen der auf die Permanentmagnet-Elemente im Betrieb wirkenden Fliehkräfte die keilförmigen Fortsätze nicht in radialer Richtung merklich verformt.

In einer Variante der permanenterregten elektrische Maschine ist der Nutkeil an die Gestalt der keilförmigen Fortsätze so angeglichen, dass der Nutkeil die Ausnehmung zu dem Ständer oder zu einem Luftspalt hin zumindest annähernd bündig und glatt abschließt.

In einer Variante der permanenterregten elektrischen Maschine ist der Nutkeil aus einem vorzugsweise Siliziumnitrid enthaltenden Keramikmaterial gebildet.

In einer Variante der permanenterregten elektrischen Maschine sind die keilförmigen Fortsätze dazu eingerichtet, form- oder reibschlüssig mit dem Nutkeil zu interagieren. Dazu können die keilförmigen Fortsätze angeraut oder gekerbt sein, so dass sich der Nutkeil mit seinem zum Permanentmagnet-Element hingewandten Rand in die keilförmigen Fortsätze oder die daran angrenzende Wand der Ausnehmung eingräbt und eine hohe Reibungskraft wirkt. Dabei soll eine Selbsthemmung auftreten, damit sich keine betriebliche Verlagerung des der Nutkeils einstellt.

Alternativ können die keilförmigen Fortsätze im Bereich der Klemmung so ausgeführt sein, dass eine plastische Verformung eintritt und die maximale Vorspannung erhalten bleibt. Der Nutkeil kann so geformt sein, dass der Luftspalt glatt wird, um die Luftreibungsverluste zu reduzieren.

In einer Variante der permanenterregten elektrischen Maschine, konfiguriert als Innenläufermaschine, mit einem Ständer und einem Läufer, wobei der Ständer eine Spulenanordnung aufweist und der Läufer mit Permanentmagnet-Elementen versehen ist, weist der Läufer ein Tragrohr mit entlang seines Umfangs angeordneten Magnetträger auf, wobei das Tragrohr die Magnetträger in radialer Richtung unverlierbar trägt. Dazu kann in einer Variante das Tragrohr des Läufers mit hinterschnittenen Ausnehmungen versehen sein, in die gegengleich geformte Fortsätze der Magnetträger eingreifen, oder die Magnetträger ist mit hinterschnittenen Ausnehmungen versehen, in die gegengleich geformte Fortsätze des Tragrohrs eingreifen.

Zur Montage der permanenterregten elektrischen Maschine können folgende Schritte dienen: Aufweiten des Tragrohrs des Läufers in radialer Richtung, so dass sich die hinterschnittenen Ausnehmungen in Umfangsrichtung des Tragrohrs vergrößern, Einfügen der Fortsätze der Magnetträger in die hinterschnittenen Ausnehmungen in Längs- oder Radialrichtung des Tragrohrs, und Zurücknehmen der Aufweitung des Tragrohrs, so dass die hinterschnittenen Ausnehmungen die gegengleich geformten Fortsätze formschlüssig festhalten.

Dieses Aufweiten des Tragrohrs des Läufers kann durch Abdichten des hohlzylindrischen Tragrohrs an seinen Stirnseiten, und Beaufschlagen des abgedichteten Tragrohrs mit Fluiddruck oder radialem mechanischem Druck erfolgen.

Ein Verfahren zur Montage einer permanenterregten elektrischen Maschine hat in einer Variante die Schritte: radiales Dehnen von am Tragrohr des Läufers angeordneten Magnettaschen durch Einsetzen der Nutkeile in die Magnettaschen und Vorspannen der Nutkeile in den Magnettaschen radial nach außen in einem Maß das höher ist als es der maximalen betrieblichen Belastung entspricht, so dass sich die Seitenwand der Magnettaschen radial längen, und stirnseitiges Einschieben der Permanentmagnet-Elemente in die durch die Nutkeile radial verschlossenen Magnettaschen.

Dabei können die Nutkeile in den Magnettaschen durch eine anstelle der Permanentmagnet-Elemente in die Magnettaschen eingebrachte, ggf. radial nach außen bombierte Zugbrücke definiert nach radial außen gezogen werden. Hierzu überragt die Zugbrücke jeweils die Magnettasche in Längsrichtung. Auf beiden Seiten ist in den überragenden Teil je eine, vorzugsweise federvorgespannten Schraube eingebracht, die gegen einen den Läufer umgebenden Ring definiert nach radial außen gezogen wird. Damit zieht die Zugbrücke den Nutkeil in eine radial nach außen liegende Position in der er und/oder das Permanentmagnet-Element fixiert wird. Dazu können die Permanentmagnet-Elemente und/oder die Nutkeile in den Magnettaschen zum Beispiel durch Klebstoff, Wellfeder oder Hydraulikbalg fixiert werden.

Die Permanentmagnet-Elemente können als Press-, Guss- oder Schnitt-Teile aus einer AlNi- oder AlNiCo-Legierung, aus Barium- oder Strontiumferrit, aus einer SmCo-, oder NdFeB-Legierung gebildet sein. Damit sind Energieprodukte (BH)ₘₐₓ von Permanentmagneten im Bereich von etwa 30 bis etwa 300 Kilojoule/ Kubikmeter - auch im erhöhten Temperaturbereich von etwa 150 bis etwa 180 Grad Celsius - erreichbar.

Die Permanentmagnet-Elemente können auch als Bauteile aus magnetischen Pulverteilchen, auch als Sintermaterial oder eingebettet in temperaturbeständige Kunststoffbinder enthaltend zum Beispiel Polyamid, Polyphensulfid, Duroplast, Epoxidharz, oder dergl. gebildet sein. Es kann sich bei dem Kunststoffbinder auch um Methacrylatklebstoff, Epoxidharzklebstoff, Polyurethanklebstoff, Phenolharzklebstoff, Epoxidharz mit Faserverstärkung, oder hydrophobiertes Epoxidgießharz handeln.

An den Statorpolen (Zentral- und Seitenpolen) können Zahnköpfe angeordnet sein, die ein Teil des Zahnes sein können oder die mit Zähnen ohne Köpfe zur Verbesserung des Nutfüllfaktors in jeweilige Nutverschlüsse jeder Wicklung der Spulenanordnung integriert sein können , wobei die Nutverschlüsse den Ständer bzw. Läufer zum Luftspalt hin zumindest annähernd bündig und glatt abschließen. Diese Maßnahmen können dazu beitragen, dass Wirkungsgrad der Maschine, bedingt durch verringerten Strömungswiderstand im Luftspalt zunimmt; Läuferverluste können um bis zu Dreiviertel sinken, ohne dabei den Nutfüllfaktur der Ständerspulen sinken und damit die ohmschen Verluste steigen zu lassen.

Jeder Zentralpol und seine zwei Seitenpole können an ihrer vom Luftspalt abgewandten Außenseite von seinen benachbarten Zentralpolen und deren magnetischen Rückschlüssen zumindest teilweise abgeteilt sein. Hieraus ergibt sich für die Außenfläche des Ständers eine gegenüber einem durchgehenden Kreisringmantel erheblich vergrößerte Fläche. Dies verbessert die Wärmeabfuhr vom Ständer und erlaubt eine wesentlich bessere Kühlung.

Der Luftspalt zwischen den Magnetfluss-Polen einerseits und den Zentralpolen und deren magnetischen Rückschlüssen andererseits kann zwischen etwa 0,1 Millimeter und etwa 1,5 Millimeter oder mehr betragen, wobei auch alle dazwischen liegenden Werte als hier offenbart gelten. Dabei kann zum Erreichen eines im Spaltmaß im Wesentlichen konstanten Luftspaltes die Kontur der Zentralpole und deren magnetischen Rückschlüssen zum Luftspalt hin gegengleich zu den Magnetfluss-Polen gestaltet sein.

Die wie oben beschrieben gestalteten Magnetfluss-Pole mit ihrer, sich zum Luftspalt hin verbreiternden Querschnittsgestalt verringern oder minimieren die magnetischen Streuflüsse.

Zur Bildung der Spulenanordnung können Kupferlackdraht, Kupferflachbänder, oder Kupferlitzen bestehend aus lackisolierten Einzelleitern verwendet werden, die miteinander verdrillt oder verflochten sind. Mit derartigen Litzen kann der Erhöhung des Leiterwiderstandes bei höheren Frequenzen entgegengewirkt werden.

### Kurzbeschreibung der Figuren

Weitere Merkmale, Eigenschaften, Vorteile, Zweckmäßigkeiten der Vorrichtungen und der Verfahrensweisen sind der nachfolgenden Beschreibung in Verbindung mit der Zeichnung zu entnehmen. Auch mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen.

### Detaillierte Beschreibung der Ausführungsbeispiele

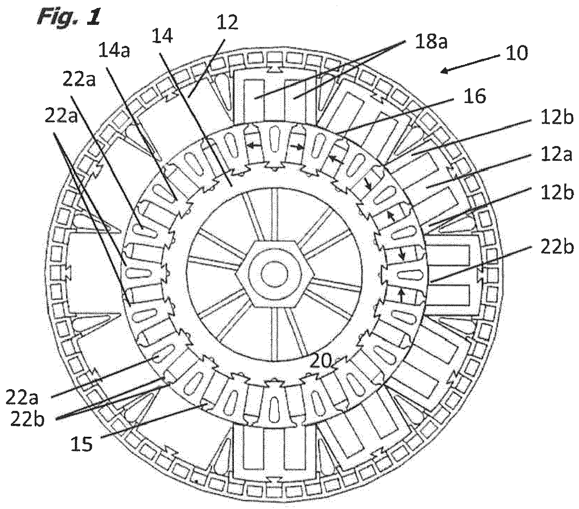

Fig. 1 zeigt einen Querschnitt durch eine permanenterregte elektrische Maschine, die in Form einer Innenläufermaschine ausgestaltet ist. Die elektrische Maschine 10 hat einen Ständer 12 und einen Läufer 14. In der hier veranschaulichten Variante hat der Ständer 12 eine Spulenanordnung 18, und der Läufer 10 ist mit Permanentmagnet-Elementen (→) versehen. Der Ständer 12 umgibt in der Variante der Fig. 1 unter Bildung eines Luftspaltes 16 den Läufer 14 konzentrisch. Der Ständer 12 hat hier mehrere einzelne Segmente mit zum Luftspalt 16 hin orientierten, zueinander benachbarten Zentralpolen 12a, von denen jeder jeweils eine konzentrierte Wicklung 18a der Spulenanordnung 18 trägt und zwei Seitenpole 12b zum Luftspalt 16 hin hat. Die Zentralpole 12a und ihre zwei Seitenpole 12b in den Ständersegmenten sind aus E-förmigen ferromagnetischen Blechen gestapelt, deren drei freie Enden zum Luftspalt 16 hinweisen. Das mittlere freie Ende bildet den Zentralpol 12a, der die konzentrierte Wicklung 18a trägt. Der besseren Anschaulichkeit sind nicht alle Wicklungen und Segmente gezeigt.

Ein in der veranschaulichten Variante einteiliger, praktisch unmagnetischer Läuferrücken 20 aus Aluminium, Edelstahl oder Titan trägt an seiner einen radial außen liegenden Außenseite, mehrere zueinander benachbarte, Magnetfluss-Pole 22 in radialer Richtung unverlierbar. Die Magnetfluss-Pole 22 bilden die magnetisch leitenden Magnettaschen.

Dazu ist in der gezeigten Variante das Tragrohr des Läufers 14 mit hinterschnittenen Ausnehmungen in Form von Schwalbenschwanz-Nuten versehen ist, in die gegengleich geformte Fortsätze der Magnetfluss-Pole 22 eingreifen. Das Tragrohr ist an seiner Innenwand durchgehend und an seiner Außenwand nach Art einer Blechung mit gleich-beabstandeten radialen Schlitzen versehen. (Lamellierung) zur Begrenzung der Wirbelströme. Jeweils zwei benachbarte Magnetfluss-Pole 22 bilden jeweils eine Magnettasche. Und der der Magnetfluss-Pole 22 in der vorliegenden Variante eine in axialer Richtung hohlprismatische Gestalt mit Kühlkanälen 22a (Siehe Fig. 1). Die Magnetfluss-Pole 22 sind aus lamelliertem und gegeneinander isoliertem Blechmaterial mit einer Blechdicke von etwa 0,025 mm gebildet. Das Konzept des rückschlussfreien Läufers erlaubt, die Magnetfluss-Pole 22 einzeln, und dadurch mit einer hohen Materialausnutzung herzustellen (ca.80% statt 25% bei Vollschnittausführung) Dies ist besonders bei hochwertigem Material von Vorteil. Zudem kann wegen der Einzel-Magnetfluss-Pole 22, die an das Tragrohr des Läufers montiert werden, vorteilhaft Material mit magnetischer Vorzugsrichtung eingesetzt werden.

Jeder Kühlkanal 22a hat an seinen beiden stirnseitigen Enden erste und zweite und ist zur Durchströmung mit einem Kühlfluid, hier bevorzugt Luft, eingerichtet. Bei der in Fig. 1 veranschaulichten Variante hat der Magnetfluss-Pol 22 eine im Querschnitt etwa kreisringsegmentförmige oder trapezförmige Gestalt. Die längere konzentrische Seite 22b weist zum Luftspalt 16 hin. Zwischen zwei zueinander benachbarten Magnetfluss-Polen 22 ist jeweils ein Permanentmagnet-Element N→S aufgenommen. Jeweils ein Permanentmagnet-Element → hat eine im Querschnitt den parallel zueinander stehenden Seiten der Magnetfluss-Pole 22 gegengleich entsprechende, etwa quaderförmige Gestalt. Die kürzere parallelen Seiten des Permanentmagnet-Elements sind dabei zum Luftspalt 16 bzw. zum Tragrohr hin orientiert und die beiden längeren Seiten sind zu den jeweiligen Seiten der Magnetfluss-Pole 22 hin orientiert.

Die Permanentmagnet-Elemente sind in der vorliegenden Variante aus einer NeFeB -Legierung eingebettet in Kunststoffbinder gebildet. Andere Legierungen sind selbstverständlich möglich. Die Permanentmagnet-Elemente → sind magnetisch im Wesentlichen tangential orientiert, und zwei zueinander benachbarte Permanentmagnet-Elemente → sind jeweils magnetisch entgegengesetzt orientiert. Zwei einander benachbarte Magnetfluss-Pole 22 überragen das zwischen ihnen aufgenommene Permanentmagnet-Element → in radialer Richtung zum Luftspalt 16 hin. Dies vermindert den Betrieb der Maschine störende magnetische Flüsse.

Die Magnetfluss-Pole 22 des Läufers 14 überragen die Permanentmagnet-Elemente in radialer Richtung zu dem Ständer 12 hin. An ihrem jeweiligen Rand zum Ständer hin sind die Magnetfluss-Pole 22 zur Bildung der Magnettaschen mit tangential orientierten, keilförmigen Fortsätzen 22b versehen, die zu einer radial orientierten Mittellängsachse der jeweiligen Magnettasche in einem Winkel von etwa 20° bis etwa 70°, vorzugsweise etwa 45° orientiert sind. Zwischen jedem der Permanentmagnet-Elemente und den keilförmigen Fortsätzen 22b der betreffenden Magnettasche ist ein Nutkeil 15aufgenommen, dessen Gestalt zumindest annähernd zu den keilförmigen Fortsätzen der jeweiligen durch die Magnetfluss-Pole 22 gebildeten Magnettasche korrespondiert.

Der Nutkeil 15 und die keilförmigen Fortsätze 22b sind derart korrespondierend schräg gestaltet, dass eine auf die Wand der die Magnettasche Magnetfluss-Pole 22 und die keilförmigen Fortsätze wirkende Spreizkraft wegen der auf die Permanentmagnet-Elemente im Betrieb wirkenden Fliehkräfte die keilförmigen Fortsätze 22b nicht in radialer Richtung merklich verformt.

Der Nutkeil 15 ist an die Gestalt der keilförmigen Fortsätze 22b so angeglichen, dass der Nutkeil 15 die durch die Magnetfluss-Pole 22 gebildeten Magnettasche zu dem Ständer 12 oder zu dem Luftspalt 16 hin zumindest annähernd bündig und glatt abschließt. Der Nutkeil 15 ist aus einem Siliziumnitrid enthaltenden Keramikmaterial gebildet.

Die einzelnen Segmente des Ständers 12 haben an den Zentralpolen 12a eisenhaltige Zahnköpfe 12' zur Verringerung der Verluste angeordnet. Diese Zahnköpfe 12' sind in jeweilige Nutverschlüsse 34 jeder Wicklung 14a der Spulenanordnung 14 integriert. Die Nutverschlüsse 34 schließen den Ständer 12 zum Luftspalt hin bündig und glatt ab.

Zur Bildung der Spulenanordnung können Litzen bestehend aus lackisolierten, miteinander verdrillten oder verflochtenen Einzelleitern verwendet werden. Dies wirkt der Erhöhung des Leiterwiderstandes bei höheren Frequenzen entgegen. In einem elektrischen Leiter entstehen durch magnetische Felder des Wechselstromes Wirbelströme, die dem Stromfluss entgegenwirken. Diese Wirbelströme nehmen bei höheren Frequenzen zu. Zum Gleichstromwiderstand addiert sich demnach ein von der Frequenz abhängiger Wechselstrom-Wirkwiderstand. Die Wirbelstromverluste sind beim Grund der durch die Magnetfluss-Joche gebildeten Nut am kleinsten und nehmen nach außen zum Luftspalt hin zu. Um die vorgenannten Verluste so gering wie möglich zu halten, wird der Leiterquerschnitt reduziert, was weniger Wirbelstromverluste hervorruft und führt dafür mehrere Leiter parallel. Um die Strom-Asymmetrie der einzelnen Leiter auszugleichen, werden die Leiter miteinander verdrillt oder verseilt. Eine unterschiedliche Koppelung der Streufelder mit den einzelnen parallel- geschalteten Leitern würde zu Ausgleichsströmen und zusätzlichen Verlusten führen. Die Verdrillung ist so gewählt, dass über die Länge der Litze gesehen die Position eines Drahtes gleichmäßig zwischen dem Nutgrund und der Nutöffnung abwechselt.

Der Einzelleiterquerschnitt sollte mit steigender Frequenz abnehmen; im Bereich um 1 kHz sollte der Einzelleiterquerschnitt etwa 0.4 mm betragen. Zur Verbesserung des Füllfaktors (Rauminhalt des Wickelraumes bezogen auf den Rauminhalt der elektrischen Leiters) setzt man vorzugsweise Litzen mit rechteckigem Profil oder ungleich dicke Runddrähte ein. Der Füllfaktorgewinn ergibt sich aus der Verdichtung der Litze, der besseren Füllung des Wickelraumes durch die Rechteckgeometrie. Der Einzelleiter ist vorzugsweise lackiert oder kann eine oder mehrere Umspinnungen / Umflechtungen mit unterschiedlichen Garnen, z.B. Polyamid, Baumwolle, Glas, Polyester, Aramid, usw. haben. Auch können eine oder mehrere Bandagierungen mit Polyesterfolien, Polyimidfolien, Aramidpapier, Glasbänder, etc. eingesetzt sein. Isolationen aus klebebeschichteten Folien wie Polyester und Polyimid werden wärmebehandelt, um eine gut verklebte Isolation zu erreichen. Kombinationen der vorgenannten Maßnahmen sind ebenfalls einsetzbar. Anstelle der Litzen kann auch eine massive Kupferleitung aus einem Kupferband die Wicklung bilden. Auch hierbei kann die Leitung verdrillt werden. Das Kupferband sollte in Richtung der Nut dünn sein.

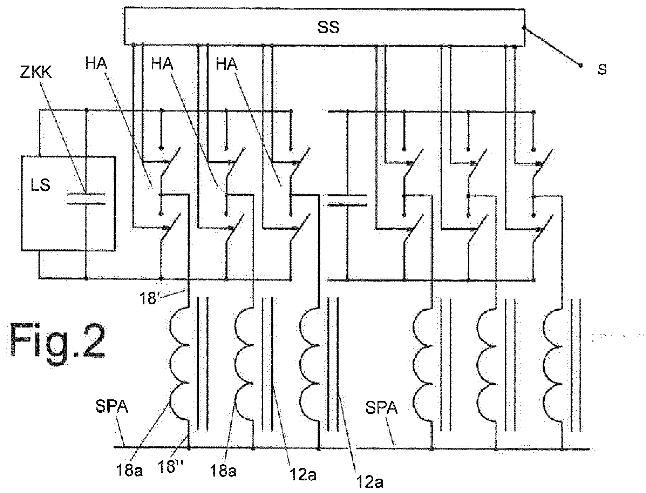

Bei dieser permanenterregten elektrischen Maschine 10 der Fig. 1 hat die Spulenanordnung 18 mehrere Einzelpolwicklungen 18a. Der Läufer 14 hat in diesem Beispiel 20 Pole und der Ständer hat 12 Pole. Damit hat der Läufer eine geradzahlige Polzahldifferenz (=8) zum Ständer 12. Es sind auch andere Polzahlen und andere ganzzahlige Polzahldifferenzen möglich. Die elektrische Maschine ist damit als eine mehrphasige Maschine ausgestaltet. Wie in Fig. 2 veranschaulicht, ist jede der Einzelpolwicklungen 18a mit einem ersten Wicklungsanschluss 18' über eine jeweilige Halbbrückenanordnung HA mit einer Energiespeicher LS verbunden. Jede der Einzelpolwicklungen 18a ist außerdem mit einem zweiten Wicklungsanschluss 18" mit einem Sternpunkt-Anschluss SPA verbunden. Eine Steuerschaltung SS ist dazu eingerichtet und programmiert, in Abhängigkeit von externer Signalisierung S die jeweilige Halbbrückenanordnung HA jeder der Einzelpolwicklungen 18a zeitlich gesteuert zu betätigen, wobei durch die zeitliche Schaltabfolge der Halbbrückenanordnungen HA jeder der Einzelpolwicklungen 18a auch die die Phasenzahl der Maschine festzulegen ist, um in Abhängigkeit auch der Polzahldifferenz eine 2-, 3- oder 6-phasige, oder mehrphasige elektrische Maschine 10 zu bilden.

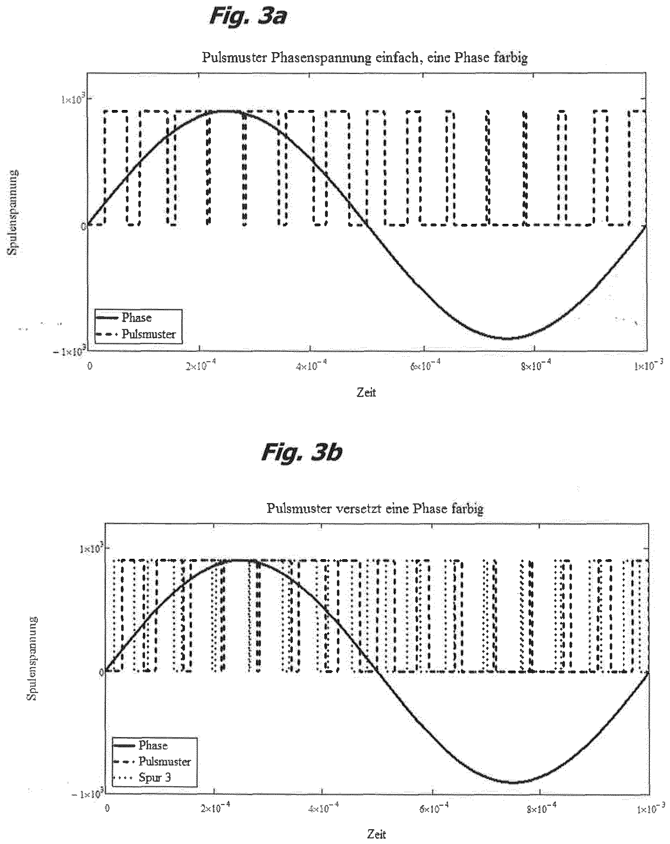

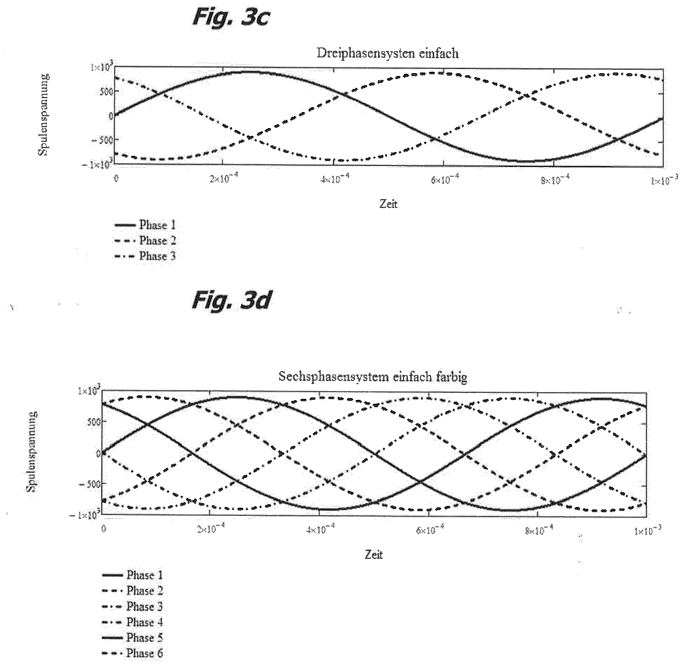

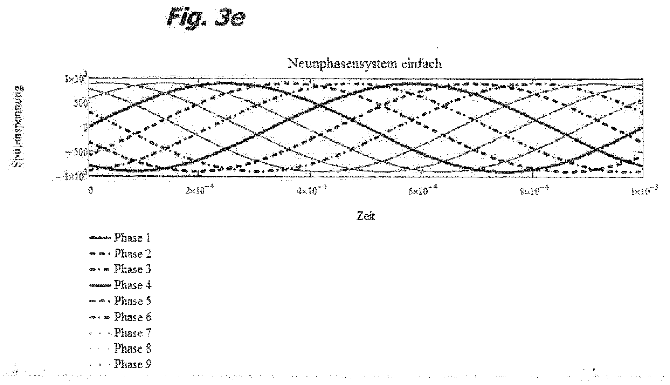

Die Fig. 3a - 3d zeigen die pulsbreitenmodulierte Ansteuerung der einzelnen Phasen (siehe Fig. 3a), wobei das die Puls-Pausen-Verhältnis die Ein-Aus-Schaltdauer und Polarität der Spannung für die jeweilige(n) Wicklungen bzw. Phasen definiert. In Fig. 3b ist ein zweifach versetzter Pulszug für eine Phase veranschaulicht. Fig. 3c - 3e veranschaulichen die Phasenverlauf eines Drei-, Sech- und Neun-Phasensystems.

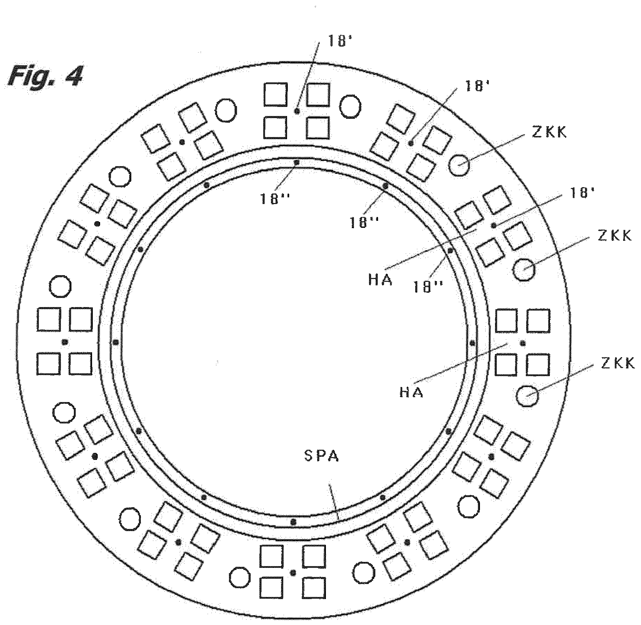

In Fig. 4 ist eine Platinenanordnung gezeigt, die an einer Stirnseite der elektrischen Maschine 10 angeordnet ist und die Steuerschaltung mit den jeder der Einzelpolwicklungen 18a zugeordneten Halbbrückenanordnungen HA und der Leistungsversorgung LV trägt. Dabei ist jeder der ersten Wicklungsanschlüsse 18' unmittelbar und zuleitungsfrei mit der ihm zugeordneten Halbbrückenanordnung HA verdrahtet. Der Sternpunkt-Anschluss SPA für jeden zweiten Wicklungsanschluss 18" der Einzelpolwicklungen 18a ist ringförmig ausgestaltet und an der selben Stirnseite des Ständers / Läufers angeordnet. Die Platine ist mehrlagig gestaltet und trägt in einer nicht veranschaulichten Platinenlage die Steuerschaltung SS. Die Einzelpolwicklungen der Spulenanordnung 18 haben eine konstante Polteilung. Jede der Einzelpolwicklungen 18a ist mit dem ersten Wicklungsanschluss 18' über die jeweilige Halbbrückenanordnung HA1 mit einem Zwischenkreiskondensator ZKK der Leistungsversorgung zu verbinden.

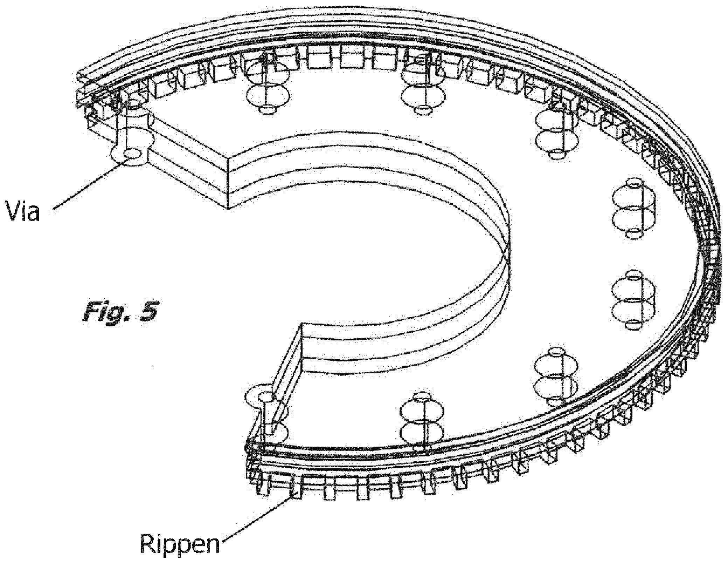

Die Platinenanordnung ist aus einem wärmeleitenden, elektrisch isolierenden Keramikmaterial zum Beispiel Aluminiumoxid, Aluminiumnitrid, Siliziumnitrid, gebildet, das an seiner dem Ständer und/oder Läufer zugewandten Seite mit oberflächenvergrößernden Strukturen, zum Beispiel Rippen oder Stegen ausgestaltet ist. Im Innern ist die Platinenanordnung mit fluiddurchströmten internen Kühlstrukturen ausgestaltet ist. An ihrer dem Ständer und Läufer abgewandten Seite ist die Platinenanordnung mit elektrischen Leiterbahnen und Kontaktstellen, zum Beispiel Durchkontaktierungen VIA für die Wicklungsanschlüsse der Einzelpolwicklungen für die Halbbrückenanordnungen HA und die Leistungsversorgung LV ausgestaltet. (siehe auch Fig. 5)

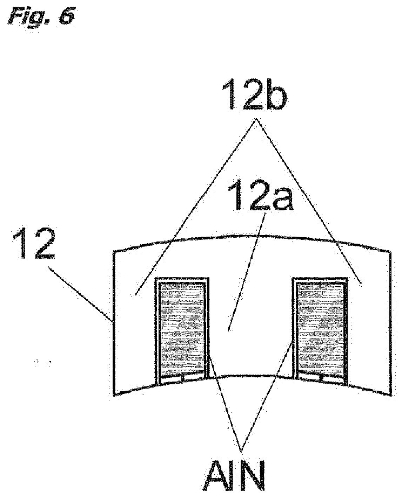

Für die Entwärmung der Einzelpolwicklungen des Ständers 12 wird als Nutwandisolierung Aluminiumnitrid (AlN) - Keramik verwendet. AlN-Keramik besitzt eine sehr hohe Wärmeleitfähigkeit von 180 W/(m·K). In der in Fig. 6 veranschaulichten Variante ist die Dicke der AIN-Keramik von z.B. 400µm. Die Ankoppelung der Keramik an die Nutwand ist mit einem hoch wärmeleitenden Kleber realisiert. Die Isolation am Nutgrund wird durch entsprechende Kriechstrecken realisiert.

Die vorangehend beschriebenen Varianten der Vorrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Permanenterregte elektrische Maschine (10), mit einem Ständer (12) und einem Läufer (14), wobei entweder der Ständer (12) eine Spulenanordnung (18) aufweist und der Läufer (14) mit Permanentmagnet-Elementen (→) versehen ist, oder der Läufer eine Spulenanordnung aufweist und der Ständer mit Permanentmagnet-Elementen versehen ist, wobei
- die Spulenanordnung (18) mehrere Einzelpolwicklungen (18a) aufweist,
- der Läufer (14) eine geradzahlige Polzahldifferenz zum Ständer (12) aufweist, wodurch die elektrische Maschine (10) als eine mehrphasige Maschine ausgestaltet ist,
- jede der Einzelpolwicklungen (18a) mit einem ersten Wicklungsanschluss (18') über eine jeweilige Halbbrückenanordnung (HA) mit einem Energiespeicher (LS) zu verbinden ist,
- jede der Einzelpolwicklungen (18a) mit einem zweiten Wicklungsanschluss (18") mit einem Sternpunkt-Anschluss (SPA) zu verbinden ist,
- eine Steuerschaltung (SS) dazu eingerichtet ist, in Abhängigkeit von externer Signalisierung (S) die jeweilige Halbbrückenanordnung (HA) jeder der Einzelpolwicklungen (18a) zeitlich gesteuert zu betätigen, wobei durch die zeitliche Schaltabfolge der Halbbrückenanordnungen (HA) jeder der Einzelpolwicklungen (18a) auch die die Phasenzahl der Maschine festzulegen ist, um in Abhängigkeit auch der Polzahldifferenz eine 2-, 3- oder 6-phasige, oder mehrphasige elektrische Maschine (10) zu bilden.

2. Permanenterregte elektrische Maschine (10) nach Anspruch 1, bei der an einer Stirnseite eine Steuerschaltung (SS) mit den jeder der Einzelpolwicklungen (18a) zugeordneten Halbbrückenanordnungen (HA) und der Leistungsversorgung (LV) auf einer oder mehreren Platinen angeordnet ist, wobei jeder der ersten Wicklungsanschlüsse (18') unmittelbar und zuleitungsfrei mit der ihm zugeordneten Halbbrückenanordnung (HA) verdrahtet ist.

3. Permanenterregte elektrische Maschine (10) nach Anspruch 2, bei der die Platinenanordnung mit der Steuerschaltung (SS) und den Halbbrückenanordnungen (HA) aus einem wärmeleitenden, elektrisch isolierenden Keramikmaterial zum Beispiel Aluminiumoxid, Aluminiumnitrid, Siliziumnitrid, gebildet sind, das an seiner dem Ständer und/oder Läufer zugewandten Seite mit oberflächenvergrößernden Strukturen, zum Beispiel Rippen oder Stegen ausgestaltet ist, und/oder mit fluiddurchströmten internen Kühlstrukturen ausgestaltet ist, und/oder an seiner dem Ständer und/oder Läufer abgewandten Seite mit elektrischen Leiterbahnen und Kontaktstellen für die Halbbrückenanordnungen (HA) und die Leistungsversorgung (LV) ausgestaltet ist.

4. Permanenterregte elektrische Maschine (10) nach einem der vorherigen Ansprüche, bei der die Einzelpolwicklungen der Spulenanordnung (18) eine konstante Polteilung aufweisen.

5. Permanenterregte elektrische Maschine (10) nach einem der vorherigen Ansprüche, bei der
- jede der Einzelpolwicklungen (18a) mit dem ersten Wicklungsanschluss (18') über die jeweilige Halbbrückenanordnung (HA1) mit einem Zwischenkreiskondensator der Leistungsversorgung zu verbinden ist, und/oder
- der Sternpunkt-Anschluss (SPA) für jeden zweiten Wicklungsanschluss (18") der Einzelpolwicklungen (18a) (teil-)ringförmig ausgestaltet ist und an einer Stirnseite des Ständers und/oder Läufers angeordnet ist.

6. Elektrische Maschine (10), mit einem Ständer (12) und einem Läufer (14), wobei der Ständer (12) und/oder der Läufer eine Spulenanordnung (18) aufweist, die in einem weichmagnetischen Kern zumindest teilweise in wenigstens einer Nut aufgenommen ist, und eine Nutisolierung zwischen einer Nutwand und/oder einem Nutgrund des Kerns und der Spulenanordnung (18) aus Keramik, Aluminiumnitrid (AlN) - Keramik oder Siliziumnitrid (Si₃N₄) - Keramik angeordnet ist.

7. Permanenterregte elektrische Maschine (10), mit einem Ständer (12) und einem Läufer (14), wobei der Ständer (12) eine Spulenanordnung (18) aufweist und der Läufer (14) mit Permanentmagnet-Elementen (→) versehen ist, wobei
- die Permanentmagnet-Elemente (-->) eine im wesentlichen quaderförmige Gestalt aufweisen und in entsprechend geformten Magnettaschen (14a) des Läufers (14) aufgenommen sind,
- die durch Magnetfluss-Pole (22) gebildeten Magnettaschen (14a) des Läufers (14) die Permanentmagnet-Elemente (→) in radialer Richtung zu dem Ständer (12) hin überragen, und an ihrem jeweiligen Rand zum Ständer (12) hin mit tangential orientierten, keilförmigen Fortsätzen (22b') versehen sind, die zu einer Mittellängsachse der jeweiligen Ausnehmung (14a) in einem Winkel von etwa 20 ° bis etwa 70°, vorzugsweise etwa 45° orientiert sind,
- zwischen jedem der Permanentmagnet-Elemente (→) und den keilförmigen Fortsätzen (22b) der betreffenden Magnetfluss-Pole (22) ein Nutkeil (15) aufgenommen ist, dessen Gestalt zumindest annähernd zu den keilförmigen Fortsätzen (22b) der jeweiligen Magnettaschen (14a) korrespondiert.

8. Permanenterregte elektrische Maschine (10) nach Anspruch 7, wobei der Nutkeil (15) und die keilförmigen Fortsätze (22b) derart korrespondierend schräg gestaltet sind, dass eine auf die Wand der Magnettaschen und/oder die keilförmigen Fortsätze (22b) wirkende Spreizkraft wegen der auf die Permanentmagnet-Elemente (→) im Betrieb wirkenden Fliehkräfte die keilförmigen Fortsätze (22b) nicht in radialer Richtung merklich verformt, und/oder
wobei der Nutkeil (15) an die Gestalt der keilförmigen Fortsätze (22b) so angeglichen ist, dass der Nutkeil (15) die Magnettasche zu dem Ständer (12) oder zu einem Luftspalt hin zumindest annähernd bündig und glatt abschließt und/oder
wobei der Nutkeil (15) aus einem vorzugsweise Siliziumnitrid enthaltenden Keramikmaterial gebildet ist, und/oder
wobei die keilförmigen Fortsätze (22b) dazu eingerichtet sind, form- oder reibschlüssig mit dem Nutkeil (15) zu interagieren.

9. Permanenterregte elektrische Maschine (10), konfiguriert als Innenläufermaschine, mit einem Ständer (12) und einem Läufer (14), wobei der Ständer (12) eine Spulenanordnung (18) aufweist und der Läufer (14) mit Permanentmagnet-Elementen (→) versehen ist, wobei - der Läufer (14) ein Tragrohr mit entlang seines Umfangs angeordneten Magnetträger aufweist, wobei das Tragrohr die Magnetträger in radialer Richtung unverlierbar trägt.

10. Permanenterregte elektrische Maschine (10) nach Anspruch 9, wobei das Tragrohr des Läufers (14) mit hinterschnittenen Ausnehmungen versehen ist, in die gegengleich geformte Fortsätze der Magnetträger eingreifen, oder die Magnetträger mit hinterschnittenen Ausnehmungen versehen ist, in die gegengleich geformte Fortsätze des Tragrohrs eingreifen.

11. Verfahren zur Montage der Permanenterregte elektrische Maschine (10) nach Anspruch 9 oder 10, mit den Schritten:
- Aufweiten des Tragrohrs des Läufers (14) in radialer Richtung, so dass sich die hinterschnittenen Ausnehmungen in Umfangsrichtung des Tragrohrs vergrößern,
- Einfügen der Fortsätze der Magnetträger in die hinterschnittenen Ausnehmungen in Längs- oder Radialrichtung des Tragrohrs,
- Zurücknehmen der Aufweitung des Tragrohrs, so dass die hinterschnittenen Ausnehmungen die gegengleich geformten Fortsätze formschlüssig festhalten.

12. Verfahren nach Anspruch 11, bei dem das Aufweiten des Tragrohrs des Läufers (14) durch
- Abdichten des hohlzylindrischen Tragrohrs an seinen Stirnseiten, und
- Beaufschlagen des abgedichteten Tragrohrs mit Fluiddruck oder radialem mechanischem Druck
erfolgt.

13. Verfahren zur Montage einer permanenterregten elektrischen Maschine (10), mit den Schritten:
- radiales Dehnen von am Tragrohr des Läufers angeordneten Magnettaschen durch Einsetzen der Nutkeile zwischen die Magnettaschen und Vorspannen der Nutkeile zwischen den Magnettaschen radial nach außen in einem Maß das höher ist als es der maximalen betrieblichen Belastung entspricht, so dass sich die Seitenwand der Magnettaschen radial längen,
- stirnseitiges Einschieben der Permanentmagnet-Elemente (→) in die durch die Nutkeile radial verschlossenen Magnettaschen.

14. Verfahren nach Anspruch 13, bei dem
- die Nutkeile in den Magnettaschen durch eine anstelle der Permanentmagnet-Elemente zwischen die Magnettaschen eingebrachte, ggf. radial nach außen bombierte Zugbrücke, die auf beiden Seiten mit je einer, vorzugsweise federvorgespannten Schraube gegen einen den Läufer umgebenden Ring definiert nach außen gezogen wird, und/oder
- die Permanentmagnet-Elemente und/oder die Nutkeile in den Magnettaschen fixiert werden zum Beispiel durch Klebstoff, Wellfeder oder Hydraulikbalg.
